# EUROPEAN PATENT SPECIFICATION

(11) **EP 2 940 555 B1**
(45) Date of publication and mention of the grant of the patent: **19.06.2019**
(21) Application number: 15164658.5
(22) Date of filing: 22.04.2015
(51) Int. Cl.: G06F 3/0488, G06F 3/03, G06F 3/01

(54) **AUTOMATIC GAZE CALIBRATION**
AUTOMATISCHE BLICKVERFOLGUNGSKALIBRIERUNG
ÉTALONNAGE AUTOMATIQUE DU REGARD

(30) Priority: 22.04.2014 US 201414258372
(43) Date of publication of application: 04.11.2015
(73) Proprietor: Lenovo (Singapore) Pte. Ltd., Singapore 556741 (SG)
(72) Inventor: VanBlon, Russell, Raleigh, NC North Carolina 27615 (US); Weksler, Arnold, Raleigh, NC North Carolina 27613 (US); Peterson, Nathan, Durham, NC North Carolina 27705 (US)
(74) Representative: Schweiger, Martin

(56) References cited:
- WO-A1-2012/052061
- FR-A1- 2 989 874

## Description

### BACKGROUND

Gaze tracking or eye tracking technologies are increasingly being used in or in connection with other electronic devices (e.g., tablets, laptop computers, smart televisions, game consoles, etc.). The gaze tracking system may be used as an input device, e.g., tracking a user's eye focus or gaze focus as in input methodology for executing certain actions, e.g., scrolling of on-screen content, highlighting/selecting of on screen elements, etc.

Conventionally the gaze tracking system must be calibrated for use. Thus, a user is commonly taken through an initialization process or exercise whereby sample or training data is obtained in order to calibrate the system. This process essentially amounts to using image captures of the user's eye looking at predetermined targets placed on screen to calibrate the system. This permits the system to determine what parameters to use in calculating the user's gaze with respect to the screen. When a parameter changes, e.g., a user moves towards or away from the screen or otherwise changes his or her orientation relative to the device, the calibration process may need to be re-run in order to maintain the accuracy and precision of the gaze tracking system.

### BRIEF SUMMARY

The invention is defined by the appended independent claims; preferred embodiments are defined in dependent claims.

For a better understanding of the embodiments, together with other and further features and advantages thereof, reference is made to the following description, taken in conjunction with the accompanying drawings.

### BRIEF DESCRIPTION OF THE SEVERAL VIEWS OF THE DRAWINGS

FIG. 1 illustrates an example of information handling device circuitry.
FIG. 2 illustrates another example of information handling device circuitry.
FIG. 3 illustrates an example method for automatic gaze calibration.

### DETAILED DESCRIPTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "an embodiment" (or the like) means that a particular feature, structure, or characteristic described in connection with the embodiment is included in at least one embodiment. Thus, the appearance of the phrases "in one embodiment" or "in an embodiment" or the like in various places throughout this specification are not necessarily all referring to the same embodiment.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well known structures, materials, or operations are not shown or described in detail to avoid obfuscation.

As described herein, eye tracking (also referred to herein as gaze tracking) requires initial calibration. Eye tracking also requires re-calibration, e.g., when the user's head moves. Calibration typically involves the user following an object that moves across various locations on the screen. Existing solutions allow the user to calibrate eye tracking to enable it, but that is inconvenient to the user. Moreover, if the user moves his or her head, existing solutions require re-calibration if the system is to maintain accuracy and precision.

An embodiment calibrates eye tracking using known positions the user is looking at on-screen by virtue of inferring what the user is looking at using system knowledge available from component(s) outside of the gaze tracking system. The following are some non-limiting examples of system information allowing an embodiment to determine that the user is looking at a specific screen location.

An embodiment may leverage the fact that a user has touched the screen of the device (e.g., providing input to the touch screen, if any, including hovering or close proximity sensing) to infer the user has looked at that location. An embodiment may utilize the fact that a user has clicked a mouse button or selected something using another non-optical input device to infer the user has looked at that location. For example, a user may type or input text, which allows an embodiment to infer that the user is looking at or focusing on a cursor location or a word position displayed on screen. An embodiment may utilize the fact that the user has moved a mouse or cursor positioning has occurred via a non-optical input device to a screen location before clicking on a selectable element, e.g., a web page link, to infer the user has looked at that location. An embodiment may utilize the fact that a user pressed a mouse or cursor locator button (e.g., a control key) to infer the user has looked at that location. An embodiment may use the fact that a user has hovered a cursor or other selection element (e.g., pen or stylus, finger tip, etc.) over a control that performs an action (e.g., opens a menu, a dropdown list, etc.) to infer the user has looked at that location. Likewise, an embodiment may infer that the user is following with his or her eyes the cursor position and movement. For each of these, an eye tracking or gaze tracking system could self-calibrate, according to an embodiment, by matching the known screen location the user is looking at. All this may occur as the user utilized the device normally and without a need to run a calibration exercise.

In an embodiment, timing information may be taken into account given the context, e.g., of the particular non-optical input and the likelihood that the user's eyes are or were focusing on that position. In some embodiments, the timing information may include providing an offset to appropriately accommodate certain use case scenarios. For example, the eye position (image data) may need to be rewound to a moment before making a mouse selection, e.g., since the user may look down at the keyboard/mouse before making the selection. Likewise, an embodiment may need to use image data regarding the user's eye focus that is captured after an action, e.g., a cursor location input, as the user would look to the cursor location after providing such input.

Eye tracking may determine a confidence level that a given location data point is accurate or should be thrown out/not used for calibration, e.g., based on previous history of eye tracking recordings, user specific history or use patterns, etc. Once enough screen locations are gathered, eye tracking features could be automatically enabled without the need for initial calibration. Thus, an embodiment may skip entirely the gaze tracking system initialization/calibration step and simply alert the user that the system has been calibrated during use, e.g., having the calibration run as a background task.

Calibration could be maintained and updated by policy, as for example by comparing future events to maintain accuracy of the eye tracking. If not enough screen locations are identified to skip initial calibration, conventional eye tracking calibration may at least be reduced using the gathered data points. In this way, an embodiment streamlines the necessary calibration of the gaze tracking system and provides a more user-friendly experience.

The illustrated example embodiments will be best understood by reference to the figures. The following description is intended only by way of example, and simply illustrates certain example embodiments.

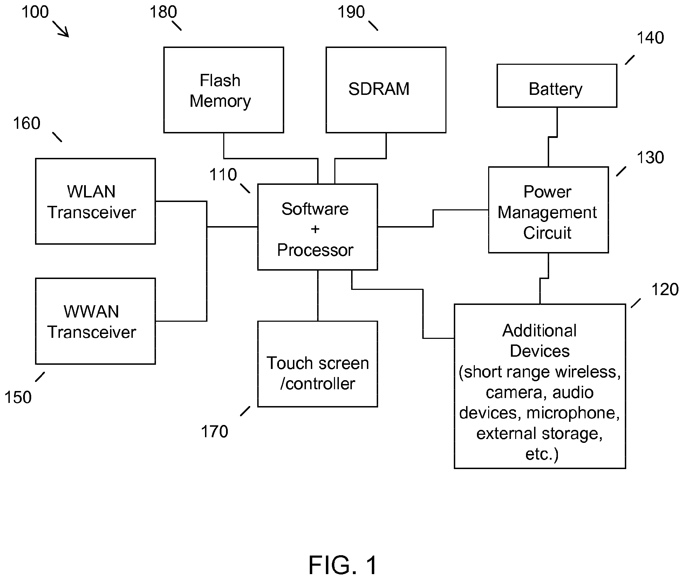

While various other circuits, circuitry or components may be utilized in information handling devices (also referred to herein as apparatuses, electronic devices, or simply devices), with regard to smart phone and/or tablet circuitry 100, an example illustrated in FIG. 1 includes a system on a circuit design found for example in tablet or other mobile computing platforms. Software and processor(s) are combined in a single circuit 110. Processors comprise internal arithmetic units, registers, cache memory, busses, I/O ports, etc., as is well known in the art. Internal busses and the like depend on different vendors, but essentially all the peripheral devices (120) may attach to a single circuit 110. The circuitry 100 combines the processor, memory control, and I/O controller hub all into a single circuit 110. Also, systems 100 of this type do not typically use SATA or PCI or LPC. Common interfaces, for example, include SDIO and I2C.

There are power management chip(s) 130, e.g., a battery management unit, BMU, which manage power as supplied, for example, via a rechargeable battery 140, which may be recharged by a connection to a power source (not shown). In at least one design, a single circuit, such as 110, is used to supply BIOS like functionality and DRAM memory.

System 100 typically includes one or more of a WWAN transceiver 150 and a WLAN transceiver 160 for connecting to various networks, such as telecommunications networks and wireless Internet devices, e.g., access points. Additional devices 120 are commonly included, e.g., a camera that captures image data that may be passed to a gaze tracking system. System 100 often includes a touch screen 170 for data input and display/rendering. System 100 also typically includes various memory devices, for example flash memory 180 and SDRAM 190.

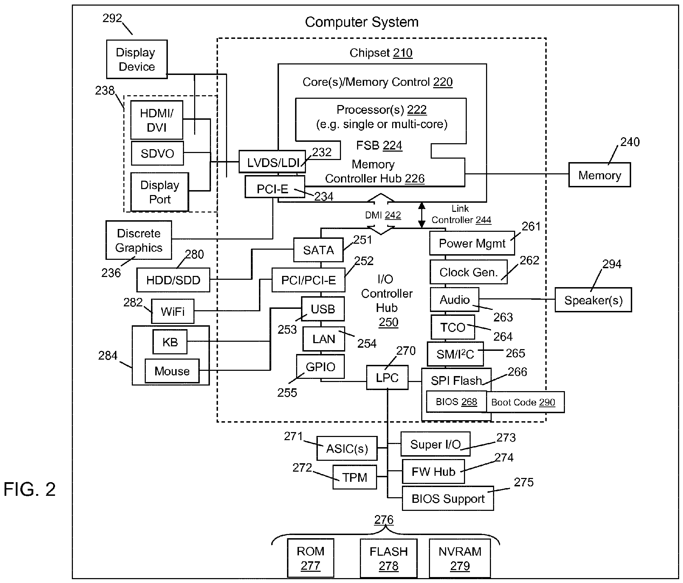

FIG. 2 depicts a block diagram of another example of information handling device circuits, circuitry or components. The example depicted in FIG. 2 may correspond to computing systems such as the THINKPAD series of personal computers sold by Lenovo (US) Inc. of Morrisville, NC, or other devices. As is apparent from the description herein, embodiments may include other features or only some of the features of the example illustrated in FIG. 2.

The example of FIG. 2 includes a so-called chipset 210 (a group of integrated circuits, or chips, that work together, chipsets) with an architecture that may vary depending on manufacturer (for example, INTEL, AMD, ARM, etc.). INTEL is a registered trademark of Intel Corporation in the United States and other countries. AMD is a registered trademark of Advanced Micro Devices, Inc. in the United States and other countries. ARM is an unregistered trademark of ARM Holdings plc in the United States and other countries. The architecture of the chipset 210 includes a core and memory control group 220 and an I/O controller hub 250 that exchanges information (for example, data, signals, commands, etc.) via a direct management interface (DMI) 242 or a link controller 244. In FIG. 2, the DMI 242 is a chip-to-chip interface (sometimes referred to as being a link between a "northbridge" and a "southbridge"). The core and memory control group 220 include one or more processors 222 (for example, single or multi-core) and a memory controller hub 226 that exchange information via a front side bus (FSB) 224; noting that components of the group 220 may be integrated in a chip that supplants the conventional "northbridge" style architecture. One or more processors 222 comprise internal arithmetic units, registers, cache memory, busses, I/O ports, etc., as is well known in the art.

In FIG. 2, the memory controller hub 226 interfaces with memory 240 (for example, to provide support for a type of RAM that may be referred to as "system memory" or "memory"). The memory controller hub 226 further includes a LVDS interface 232 for a display device 292 (for example, a CRT, a flat panel, touch screen, etc.). A block 238 includes some technologies that may be supported via the LVDS interface 232 (for example, serial digital video, HDMI/DVI, display port). The memory controller hub 226 also includes a PCI-express interface (PCI-E) 234 that may support discrete graphics 236.

In FIG. 2, the I/O hub controller 250 includes a SATA interface 251 (for example, for HDDs, SDDs, etc., 280), a PCI-E interface 252 (for example, for wireless connections 282), a USB interface 253 (for example, for devices 284 such as a digitizer, keyboard, mice, cameras, phones, microphones, storage, other connected devices, etc.), a network interface 254 (for example, LAN), a GPIO interface 255, a LPC interface 270 (for ASICs 271, a TPM 272, a super I/O 273, a firmware hub 274, BIOS support 275 as well as various types of memory 276 such as ROM 277, Flash 278, and NVRAM 279), a power management interface 261, a clock generator interface 262, an audio interface 263 (for example, for speakers 294), a TCO interface 264, a system management bus interface 265, and SPI Flash 266, which can include BIOS 268 and boot code 290. The I/O hub controller 250 may include gigabit Ethernet support.

The system, upon power on, may be configured to execute boot code 290 for the BIOS 268, as stored within the SPI Flash 266, and thereafter processes data under the control of one or more operating systems and application software (for example, stored in system memory 240). An operating system may be stored in any of a variety of locations and accessed, for example, according to instructions of the BIOS 268. As described herein, a device may include fewer or more features than shown in the system of FIG. 2.

Circuitry, as for example outlined in FIG. 1 or FIG. 2, may be used in connection with devices that implement gaze tracking. Thus, circuitry outlined in FIG. 1 and/or FIG. 2 (or some combination thereof) may be used in a system that includes a gaze tracking system or sub-system.

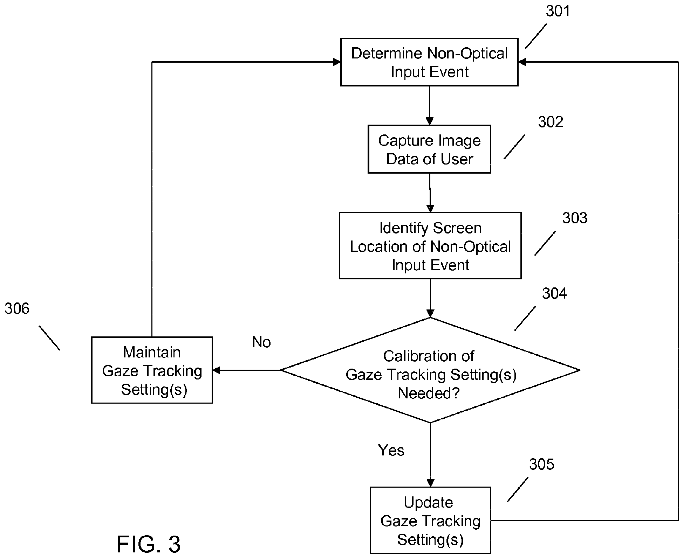

Referring to FIG. 3, an example method of automatic gaze calibration is illustrated. As described herein, an embodiment determines an occurrence of a non-optical input event at the device at 301, e.g., use of a touch screen or a mouse, etc., by the user that is in some way associated with a particular screen location. An embodiment may also capture, using a sensor such as an integrated camera, image data of a user at 302. This image data may be used in connection with the occurrence of the non-optical input event determined at 301, as follows.

An embodiment then identifies a screen location associated with the non-optical input event at 303, e.g., a particular location of a touch input event, a particular location of a cursor on screen, a particular location of a selectable item such as a web page link or a drop down menu, etc. Given this information, an embodiment calibrates the gaze tracking system of the device using the occurrence of the non-optical input event, the image data, and the screen location associated therewith. The inference of the on screen location using other system events permits an embodiment to perform a standard calibration process without forcing a user to participate in an dedicated exercise aimed at gathering such data. In other words, in lieu of forcing the user to participate in a calibration exercise in which an on screen location is determined using a specific on screen animation, an embodiment infers the on screen location using non-optical input events, as described herein.

An embodiment then determines if, given the calibration information collected, a calibration of the gaze tracking setting(s) is needed at 304. If so, the gaze tracking setting(s) may be updated at 305. Otherwise, the gaze tracking setting(s) may be maintained at 306.

Again, an embodiment may perform this processing at various times, e.g., at start up of the device or gaze tracking system itself, in which case calibration will be required, or periodically throughout the use of the device and/or the gaze tracking system itself, in which case the calibration of gaze tracking setting(s) may or may not be necessary, e.g., depending on the accuracy of the gaze tracking system determined at 304 given the current information available.

According to the present invention, the calibrating occurs according to a policy, wherein the policy initiates the calibrating responsive to a user initiated trigger, and wherein the user initiated trigger comprises head movement relative to the device exceeding a predetermined threshold due to user repositioning. The policy may initiate the calibrating repeatedly as a background task during use of the device such that an embodiment performs the calibrating transparently to the user of the device.

The calibrating includes determining a focus of user gaze with respect to the screen such that, with the inferred screen location information, an embodiment may adjust to certain events such as a user repositioning himself or herself with respect to the screen. The non-optical input event that allows a convenient determination of the on screen location of a user's focus may include any input event that has a logical association with an on screen location, e.g., a screen location input using an input device selected from the group consisting of a touch screen, a mouse, a touch pad, a stylus, and a physical keyboard.

As described herein, the identifying of a screen location associated with the non-optical input event may include coordinating timing information, e.g., of the occurrence of the non-optical input event and the capturing of the image data of the user. The coordinating timing information may thus include offsetting in time the image data of the user and the occurrence of the non-optical input event to account for certain common use-cases, e.g., looking for a cursor after providing key input identifying the location thereof, etc.

Therefore, an embodiment provides a more user-friendly calibration of the gaze tracking system and may completely or partially eliminate the need to conduct a calibration exercise at the start of the gaze tracking system. Moreover, an embodiment allows readily available system information to be used to improve the gaze tracking system technology, i.e., in terms of calibration, such that even if accuracy or precision of the gaze tracking system is lost, e.g., due to user repositioning, it may be quickly regained using system inputs available outside of the gaze tracking system itself (i.e., without conducting a specific calibration exercise).

As will be appreciated by one skilled in the art, various aspects may be embodied as a system, method or device program product. Accordingly, aspects may take the form of an entirely hardware embodiment or an embodiment including software that may all generally be referred to herein as a "circuit," "module" or "system." Furthermore, aspects may take the form of a device program product embodied in one or more device readable medium(s) having device readable program code embodied therewith.

It should be noted that the various functions described herein may be implemented using instructions stored on a device readable storage medium such as a non-signal storage device that are executed by a processor. A storage device may be, for example, an electronic, magnetic, optical, electromagnetic, infrared, or semiconductor system, apparatus, or device, or any suitable combination of the foregoing. More specific examples of a storage medium would include the following: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a storage device is not a signal and "non-transitory" includes all media except signal media.

Program code embodied on a storage medium may be transmitted using any appropriate medium, including but not limited to wireless, wireline, optical fiber cable, RF, et cetera, or any suitable combination of the foregoing.

Program code for carrying out operations may be written in any combination of one or more programming languages. The program code may execute entirely on a single device, partly on a single device, as a stand-alone software package, partly on single device and partly on another device, or entirely on the other device. In some cases, the devices may be connected through any type of connection or network, including a local area network (LAN) or a wide area network (WAN), or the connection may be made through other devices (for example, through the Internet using an Internet Service Provider), through wireless connections, e.g., near-field communication, or through a hard wire connection, such as over a USB connection.

Example embodiments are described herein with reference to the figures, which illustrate example methods, devices and program products according to various example embodiments. It will be understood that the actions and functionality may be implemented at least in part by program instructions. These program instructions may be provided to a processor of a general purpose information handling device, a special purpose information handling device, or other programmable data processing device to produce a machine, such that the instructions, which execute via a processor of the device implement the functions/acts specified.

It is worth noting that while specific blocks are used in the figures, and a particular ordering of blocks has been illustrated, these are non-limiting examples. In certain contexts, two or more blocks may be combined, a block may be split into two or more blocks, or certain blocks may be re-ordered or re-organized as appropriate, as the explicit illustrated examples are used only for descriptive purposes and are not to be construed as limiting.

This disclosure has been presented for purposes of illustration and description but is not intended to be exhaustive or limiting. Many modifications and variations will be apparent to those of ordinary skill in the art. The example embodiments were chosen and described in order to explain principles and practical application, and to enable others of ordinary skill in the art to understand the disclosure for various embodiments with various modifications as are suited to the particular use contemplated.

Thus, although illustrative example embodiments have been described herein with reference to the accompanying figures, it is to be understood that this description is not limiting and that various other changes and modifications may be affected therein by one skilled in the art without departing from the scope of the disclosure.

## Claims

1. A method, comprising:
determining (301) an occurrence of a touch input event at an input device, wherein the touch input event comprises an input event associated with a screen location input using the input device, and wherein the input device is selected from the group consisting of a touch screen, a mouse, a touch pad, a stylus, and a physical keyboard;
capturing (302) image data of a user;
identifying (303) a screen location associated with the touch input event; and
calibrating (305) a gaze tracking system of the device using the occurrence of the touch input event, the image data and the screen location, **characterised in that** the calibrating occurs according to a policy (304), wherein the policy initiates the calibrating responsive to a user initiated trigger, and wherein the user initiated trigger comprises head movement relative to the device exceeding a predetermined threshold due to user repositioning.

2. The method of claim 1, wherein said calibrating comprises determining a focus of user gaze with respect to the screen.

3. The method of claim 1, wherein the identifying a screen location associated with the touch input event comprises coordinating timing information of the determining an occurrence of the touch input event and the capturing of the image data of the user.

4. The method of claim 3, wherein the coordinating timing information comprises offsetting in time the image data of the user and the occurrence of the touch input event.

5. The method of one of claims 1 to 4, wherein the policy initiates the calibrating repeatedly as a background task during use of the device.

6. The method of one of claims 1 to 5, wherein the policy performs the calibrating transparently to the user of the device.

7. An apparatus (100), comprising:
an input device;
a screen that displays information;
a sensor that captures image data of a user of the device;
a processor operatively coupled to the touch input device, the screen and the sensor; and
a memory storing instructions executable by the processor to:
determine an occurrence of a touch input event at the input device, wherein the touch input event comprises an input event associated with a screen location input using the input device, and wherein the input device is selected from the group consisting of a touch screen, a mouse, a touch pad, a stylus, and a physical keyboard;
capture, using the sensor, image data of a user;
identify a screen location associated with the touch input event; and
calibrate a gaze tracking system of the apparatus using the occurrence of the touch input event, the image data and the screen location, **characterised in that** the calibrating occurs according to a policy, wherein the policy initiates the calibrating responsive to a user initiated trigger, and wherein the user initiated trigger comprises head movement relative to the device exceeding a predetermined threshold due to user repositioning.

8. The apparatus of claim 7, wherein to calibrate comprises determining a focus of user gaze with respect to the screen.

9. The apparatus of claim 7, wherein to identify a screen location associated with the touch input event comprises coordinating timing information of the determining an occurrence of the touch input event and the capturing of the image data of the user.

10. The apparatus of claim 9, wherein to coordinate timing information comprises offsetting in time the image data of the user and the occurrence of the touch input event.

11. The apparatus of one of claims 7-10, wherein the policy initiates the calibrating repeatedly as a background task during use of the apparatus.

12. A computer program product, comprising instructions which, when executed by a processor, cause the processor to carry out the steps of the method according to any of claims 1-6.

## Patentansprüche

1. Verfahren, umfassend:
Bestimmen (301) eines Auftretens eines Berührungseingabeereignisses an einer Eingabevorrichtung, wobei das Berührungseingabeereignis ein Eingabeereignis umfasst, das einer Bildschirmortseingabe unter Verwendung der Eingabevorrichtung zugeordnet ist und wobei die Eingabevorrichtung ausgewählt ist aus der Gruppe bestehend aus einem Berührungsbildschirm, einer Maus, einer Berührungsfläche, einem Stift und einer physikalischen Tastatur;
Erfassen (302) von Bilddaten von einem Benutzer;
Identifizieren (303) eines Bildschirmorts, der dem Berührungseingabeereignis zugeordnet ist; und
Kalibrieren (305) eines Blickverfolgungssystems der Vorrichtung unter Verwendung des Auftretens des Berührungseingabeereignisses, der Bilddaten und des Bildschirmorts, **dadurch gekennzeichnet, dass** das Kalibrieren gemäß einer Richtlinie (304) auftritt, wobei die Richtlinie das Kalibrieren in Erwiderung auf einen benutzereingeleiteten Auslöser einleitet und wobei der benutzereingeleitete Auslöser eine Kopfbewegung relativ zu der Vorrichtung umfasst, die einen vorbestimmten Schwellenwert aufgrund einer Benutzerneupositionierung überschreitet.

2. Verfahren nach Anspruch 1, wobei das Kalibrieren ein Bestimmen eines Fokus eines Benutzerblicks in Bezug auf den Bildschirm umfasst.

3. Verfahren nach Anspruch 1, wobei das Identifizieren eines Bildschirmorts, der dem Berührungseingabeereignis zugeordnet ist, ein Koordinieren von Zeitinformationen des Bestimmens eines Auftretens des Berührungseingabeereignisses und des Erfassens der Bilddaten von dem Benutzer umfasst.

4. Verfahren nach Anspruch 3, wobei das Koordinieren von Zeitinformationen ein Zeitversetzen der Bilddaten von dem Benutzer und des Auftretens des Berührungseingabeereignisses umfasst.

5. Verfahren nach einem der Ansprüche 1 bis 4, wobei die Richtlinie das Kalibrieren wiederholt als eine Hintergrundaufgabe während der Verwendung der Vorrichtung einleitet.

6. Verfahren nach einem der Ansprüche 1 bis 5, wobei die Richtlinie das Kalibrieren transparent für den Benutzer der Vorrichtung durchführt.

7. Gerät (100), umfassend:
eine Eingabevorrichtung;
ein Bildschirm, der Informationen anzeigt;
einen Sensor, der Bilddaten von einem Benutzer der Vorrichtung erfasst;
einen Prozessor, der betriebsbereit mit der Berührungseingabevorrichtung, dem Bildschirm und dem Sensor gekoppelt ist; und
einen Speicher, der Instruktionen speichert, die von dem Prozessor ausführbar sind zum:
Bestimmen eines Auftretens eines Berührungseingabeereignisses an der Eingabevorrichtung, wobei das Berührungseingabeereignis ein Eingabeereignis umfasst, das einer Bildschirmortseingabe unter Verwendung der Eingabevorrichtung zugeordnet ist und wobei die Eingabevorrichtung ausgewählt ist aus der Gruppe bestehend aus einem Berührungsbildschirm, einer Maus, einer Berührungsfläche, einem Stift und einer physikalischen Tastatur;
Erfassen von Bilddaten von einem Benutzer unter Verwendung des Sensors;
Identifizieren eines Bildschirmorts, der dem Berührungseingabeereignis zugeordnet ist; und
Kalibrieren eines Blickverfolgungssystems des Geräts unter Verwendung des Auftretens des Berührungseingabeereignisses, der Bilddaten und des Bildschirmorts, **dadurch gekennzeichnet, dass** das Kalibrieren gemäß einer Richtlinie auftritt, wobei die Richtlinie das Kalibrieren in Erwiderung auf einen benutzereingeleiteten Auslöser einleitet und wobei der benutzereingeleitete Auslöser eine Kopfbewegung relativ zu der Vorrichtung umfasst, die einen vorbestimmten Schwellenwert aufgrund einer Benutzerneupositionierung überschreitet.

8. Gerät nach Anspruch 7, wobei das Kalibrieren ein Bestimmen eines Fokus eines Benutzerblicks in Bezug auf den Bildschirm umfasst.

9. Gerät nach Anspruch 7, wobei das Identifizieren eines Bildschirmorts, der dem Berührungseingabeereignis zugeordnet ist, ein Koordinieren von Zeitinformationen des Bestimmens eines Auftretens des Berührungseingabeereignisses und des Erfassens der Bilddaten von dem Benutzer umfasst.

10. Gerät nach Anspruch 9, wobei das Koordinieren von Zeitinformationen ein Zeitversetzen der Bilddaten von dem Benutzer und des Auftretens des Berührungseingabeereignisses umfasst.

11. Gerät nach einem der Ansprüche 7 bis 10, wobei die Richtlinie das Kalibrieren wiederholt als eine Hintergrundaufgabe während der Verwendung des Geräts einleitet.

12. Computerprogrammprodukt, umfassend Instruktionen, die, wenn sie von einem Prozessor ausgeführt werden, den Prozessor dazu bringen, die Schritte des Verfahrens gemäß einem der Ansprüche 1-6 auszuführen.

## Revendications

1. Procédé, consistant à :
déterminer (301) une survenue d'un événement d'entrée tactile au niveau d'un dispositif d'entrée, l'événement d'entrée tactile comprenant un événement d'entrée associé à une entrée d'emplacement d'écran à l'aide du dispositif d'entrée, et le dispositif d'entrée étant sélectionné dans le groupe constitué d'un écran tactile, d'une souris, d'un pavé numérique tactile, d'un stylet et d'un clavier physique ;
capturer (302) des données d'image d'un utilisateur ;
identifier (303) un emplacement d'écran associé à l'événement d'entrée tactile ; et
étalonner (305) un système d'oculométrie à l'aide de la survenue de l'événement d'entrée tactile, des données d'image et d'emplacement d'écran, **caractérisé en ce que** l'étalonnage se produit selon une police (304), la police démarre l'étalonnage en réponse à un déclenchement initié par l'utilisateur, et le déclenchement initié par l'utilisateur comprenant un mouvement de tête relatif au dispositif dépassant un seuil prédéfini suite à un repositionnement de l'utilisateur.

2. Procédé selon la revendication 1, ledit étalonnage comprenant la détermination d'un foyer de regard d'utilisateur par rapport à l'utilisateur.

3. Procédé selon la revendication 1, l'identification d'un emplacement d'écran associée à l'événement d'entrée tactile consistant la coordination d'informations de synchronisation de la détermination d'une survenue de l'événement d'entrée tactile et de la capture des données d'image de l'utilisateur.

4. Procédé selon la revendication 3, la coordination des informations de synchronisation consistant à décaler dans le temps les données d'image de l'utilisateur et la survenue de l'événement d'entrée tactile.

5. Procédé selon l'une des revendications 1 à 4, la police démarre l'étalonnage de manière répétée en tant que tâche d'arrière-plan pendant l'utilisation du dispositif.

6. Procédé selon l'une des revendications 1 à 5, la police effectuant l'étalonnage de manière transparente à l'égard de l'utilisateur du dispositif.

7. Appareil (100) comprenant :
un dispositif d'entrée ;
un écran qui affiche des informations ;
un capteur qui capture des données d'image d'un utilisateur du dispositif ;
un processeur couplé fonctionnellement au dispositif d'entrée tactile, à l'écran et du capteur ;
et
une mémoire mémorisant des instructions exécutables par le processeur pour :
déterminer une survenue d'un événement d'entrée tactile au niveau du dispositif d'entrée, l'événement d'entrée tactile comprenant un événement d'entrée associé à une entrée d'emplacement d'écran et le dispositif d'entrée étant sélectionné dans le groupe constitué d'un écran tactile, d'une souris, d'un pavé numérique tactile, d'un stylet et d'un clavier physique ;
capturer, à l'aide du capteur, les données d'image d'un utilisateur ;
identifier un emplacement d'écran associé à l'événement d'entrée tactile ; et
étalonner un système d'oculométrie de l'appareil à l'aide de la survenue de l'événement d'entrée tactile, des données d'image et de l'emplacement d'écran,
l'étalonnage se produit selon une police, et le déclenchement initié par l'utilisateur comprenant un mouvement de tête par rapport au dispositif dépassant un seuil prédéfini en raison du repositionnement de l'utilisateur.

8. Appareil selon la revendication 7, l'étalonnage consistant à déterminer un foyer du regard de l'utilisateur par rapport à l'écran.

9. Appareil selon la revendication 7, l'identification d'un emplacement d'écran associé à l'événement d'entrée d'utilisateur consistant à coordonner les informations de synchronisation de la détermination d'une survenue de l'événement d'entrée tactile et de la capture des données d'image de l'utilisateur.

10. Appareil selon la revendication 9, la coordination des informations de synchronisation consistant à décaler dans le temps les données d'image de l'utilisateur et la survenue de l'événement d'entrée tactile.

11. Appareil selon l'une quelconque des revendications 7 à 10, la police démarrant l'étalonnage de manière répétée en tant que tâche d'arrière-plan pendant l'utilisation de l'appareil.

12. Produit programme d'ordinateur, comprenant des instructions qui, lorsqu'elles sont exécutées par un processeur, amènent le processeur à réaliser les étapes du procédé selon l'une quelconque des revendications 1 à 6.
